# EUROPEAN PATENT APPLICATION

(11) **EP 4 123 058 A1**
(43) Date of publication of application: **25.01.2023**
(21) Application number: 20908440.9
(22) Date of filing: 09.12.2020
(51) Int. Cl.: C25B 9/00, C01B 3/00, C25B 1/02, H01M 8/0656

(54) **HYDROGEN SYSTEM AND HYDROGEN SYSTEM OPERATION METHOD**

(30) Priority: 13.03.2020 JP 2020043782; 17.11.2020 JP 2020190839
(71) Applicant: Panasonic Intellectual Property Management Co., Ltd., Osaka-shi, Osaka 540-6207 (JP)
(72) Inventor: NAKAUE, Takayuki, Osaka-shi (JP); KAMATA, Tomoya, Osaka-shi (JP)
(74) Representative: Grünecker Patent- und Rechtsanwälte PartG mbB
(86) International application number: PCT/JP2020/045751
(87) International publication number: WO 2021/181772

(57) **Abstract**

A hydrogen system includes: a compressor that applies a voltage between an anode and a cathode to move hydrogen in hydrogen-containing gas supplied to the anode to the cathode via an electrolyte membrane and compress the hydrogen; a first flow path through which hydrogen-containing gas discharged from the anode of the compressor flows; a second flow path to supply cathode off-gas to the anode of the compressor, the cathode off-gas being discharged from the cathode of the compressor; an on-off valve provided on the second flow path; and a controller that opens the on-off valve in a normal stop.

## Description

### Technical Field

The present disclosure relates to a hydrogen system and a method of operating a hydrogen system.

### Background Art

In recent years, in light of environmental issues such as global warming and energy issues such as depletion of petroleum resources, hydrogen has been attracting attention as a clean alternative energy source that replaces fossil fuels. When hydrogen burns, it basically produces only water and discharges no carbon dioxide that causes global warming and almost no nitrogen oxides and the like. Thus, hydrogen is promising as a clean energy. For example, fuel cells are devices that utilize hydrogen highly efficiently as a fuel and have been developed and have spread to automobile power supplies and private power generation for home use.

For the upcoming hydrogen society, technological development is desired not only for producing hydrogen but also for enabling hydrogen to be stored at high density and to be transported and used in a small capacity and at low cost. In particular, to promote the spread of fuel cells that serve as distributed energy sources, it is necessary to prepare a hydrogen supply infrastructure. Hence, to supply hydrogen stably, various studies are being conducted on the production, purification, and high-density storage of high-purity hydrogen.

For example, PTL 1 describes a hydrogen purification-pressurization system in which an electrolyte membrane is provided between the anode and the cathode, and a voltage is applied between the anode and the cathode to purify and pressurize hydrogen. Here, a layered structure including an anode, an electrolyte membrane, and a cathode is referred to as a membrane electrode assembly (MEA).

Here, PTL 1 discloses that gas remaining in the hydrogen purification-pressurization system is purged by using nitrogen when the system is not in operation.

PTL 2 describes elimination of a blockage (flooding) in an anode gas flow path by supplying cathode gas to the anode-gas flow path, when condensed water in the anode-gas flow path causes flooding.

### Citation List

### Patent Literature

PTL 1: Japanese Patent No. 6299027
PTL 2: Japanese Unexamined Patent Application Publication No. 2018-199852

### Summary of Invention

### Technical Problem

An object of the present disclosure is to provide, as an example, a hydrogen system and a method of operating a hydrogen system with which the possibility of the occurrence of flooding in the anode is less than with techniques according to the related art.

### Solution to Problem

A hydrogen system according to an aspect of the present disclosure includes: a compressor that applies a voltage between an anode and a cathode to move hydrogen in hydrogen-containing gas supplied to the anode to the cathode via an electrolyte membrane and compress the hydrogen; a first flow path through which hydrogen-containing gas discharged from the anode of the compressor flows; a second flow path to supply cathode off-gas to the anode of the compressor, the cathode off-gas being discharged from the cathode of the compressor; an on-off valve provided on the second flow path; and a controller that opens the on-off valve in a normal stop.

A method of operating a hydrogen system, according to an aspect of the present disclosure includes: a step of applying a voltage between an anode and a cathode to move hydrogen in hydrogen-containing gas supplied to an anode to a cathode via an electrolyte membrane, and compress the hydrogen; a step of supplying cathode off-gas compressed at the cathode to the anode when the step of compressing the hydrogen is normally stopped; and a step of discharging, via a flow path through which hydrogen-containing gas discharged from the anode flows, the cathode off-gas supplied to the anode.

### Advantageous Effects of Invention

The hydrogen system and the method of operating a hydrogen system according to an aspect of the present disclosure provide an effect as follows. That is, with the system and the method, the possibility of the occurrence of flooding in the anode is less than with the techniques according to the related art.

### Brief Description of Drawings

[Fig. 1] Fig. 1 is a diagram illustrating an example of a hydrogen system of a first embodiment.
[Fig. 2] Fig. 2 is a diagram illustrating an example of a hydrogen system according to Example of the first embodiment.
[Fig. 3] Fig. 3 is a diagram illustrating an example of a hydrogen system of a first modification of the first embodiment.
[Fig. 4] Fig. 4 is a diagram illustrating an example of a hydrogen system of a second modification of the first embodiment.
[Fig. 5] Fig. 5 is a diagram illustrating an example of a hydrogen system of a second embodiment.
[Fig. 6] Fig. 6 is a diagram illustrating an example of a hydrogen system of a third embodiment.
[Fig. 7] Fig. 7 is a diagram illustrating an example of a hydrogen system of a fourth embodiment.
[Fig. 8] Fig. 8 is a diagram illustrating an example of a hydrogen system of a fifth embodiment.
[Fig. 9] Fig. 9 is a diagram illustrating an example of a hydrogen system of a sixth embodiment.
[Fig. 10] Fig. 10 is a diagram illustrating an example of a hydrogen system of a seventh embodiment.

### Description of Embodiments

PTL 1 does not fully study a decrease in the strength of the electrolyte membrane caused by creep when the hydrogen purification-pressurization system is not in operation. PTL 1 also does not fully study the possibility that the efficiency of the system in hydrogen compression operation is decreased when the hydrogen purification-pressurization system is restarted.

When the compressor of the electrochemical hydrogen pump or the like is stopped, high-pressure hydrogen (H₂) produced at the cathode exists at the cathode of the compressor. Hence, if the compressor is left in this state, the load based on the pressure difference between the anode and the cathode continues to be applied to the electrolyte membrane. Accordingly, the creep of the electrolyte membrane can make the electrolyte membrane thinner, reducing the strength of the electrolyte membrane.

In general, an electrolyte membrane exhibits a desired proton conductivity in a wet state. Hence, in order to maintain the efficiency of the compressor in hydrogen compression operation at a desired value, the electrolyte membrane needs to be kept in a wet state. For this reason, in many cases in techniques according to the related art, high-humidity hydrogen-containing gas is supplied to the anode of the compressor. In this case, after the compressor stops, a decrease in the temperature of the hydrogen-containing gas condenses the water vapor in the hydrogen-containing gas, which may cause blockage (flooding) in the anode-gas flow path because of the condensed water. This inhibits the diffusivity of the hydrogen-containing gas, increasing the diffusion overvoltage of the compressor, and can cause a decrease in the efficiency of the compressor during hydrogen compression operation.

The electrochemical hydrogen pump in PTL 2 takes into account the case where a blockage problem occurs in the anode-gas flow path, but it does not take into account the case of the normal stop where a blockage problem or the like does not occur in the anode-gas flow path. Specifically, there is a possibility that after the compressor of the electrochemical hydrogen pump or the like stops in a normal operation as above, condensed water is produced in the anode-gas flow path along with the decrease in the temperature of the compressor, and that this causes a blockage in the anode flow path. However, PTL 2 does not take this point into account. Also, in PTL 2, the creep of the electrolyte membrane is inhibited in the case where a blockage problem occurs in the anode-gas flow path but is not inhibited in the normal stop state.

With the background above, the inventors conducted diligent studies and focused attention on the phenomenon that the high-pressure hydrogen existing at the cathode of the compressor has a lower humidity than the high-humidity hydrogen-containing gas existing at the anode. As a result, the inventors came up with an idea of using the phenomenon to inhibit flooding of the anode gas flow path of the compressor.

Specifically, a hydrogen system of a first aspect of the present disclosure includes: a compressor that applies a voltage between an anode and a cathode to move hydrogen in hydrogen-containing gas supplied to the anode to the cathode via an electrolyte membrane and compress the hydrogen; a first flow path through which hydrogen-containing gas discharged from the anode of the compressor flows; a second flow path to supply cathode off-gas to the anode of the compressor, the cathode off-gas being discharged from the cathode of the compressor; an on-off valve provided on the second flow path; and a controller that opens the on-off valve in a normal stop.

With this configuration, the possibility of the occurrence of flooding in the anode of the hydrogen system of this aspect is less than with techniques according to the related art. Specifically, in the hydrogen system of this aspect, the on-off valve provided on the second flow path is opened in the normal stop state, so that the high-humidity hydrogen-containing gas existing at the anode can be replaced with the low-humidity cathode off-gas supplied from the cathode. In other words, since the high-humidity hydrogen-containing gas is pushed out into the first flow path by the low-humidity cathode off-gas, the gas existing at the anode is changed from the former hydrogen-containing gas to the latter cathode off-gas. This makes the occurrence of flooding in the anode gas flow path less likely in the hydrogen system of this aspect. Thus, when the compressor is restarted, it is possible to maintain the efficiency of hydrogen compression operation appropriately.

In addition, in the hydrogen system of this aspect, the decrease in the strength of the electrolyte membrane due to creep is less than in techniques according to the related art. Specifically, in the hydrogen system of this aspect, the on-off valve provided on the second flow path is opened in the normal stop state, and the pressure difference between the anode and the cathode decreases rapidly. Thus, creep is less likely to occur in the electrolyte membrane and the electrolyte membrane is less likely to become thinner. Thus, the hydrogen system of this aspect makes it possible to maintain the strength of the electrolyte membrane appropriately.

A hydrogen system of a second aspect of the present disclosure may be the hydrogen system of the first aspect, further including a third flow path through which the cathode off-gas discharged from the cathode of the compressor flows, in which the second flow path branches from the third flow path.

With the above configuration, since the second flow path branches from the third flow path in the hydrogen system of this aspect, the points at which the cathode off-gas is discharged from the cathode can be gathered in the compressor.

A hydrogen system of a third aspect of the present disclosure may be the hydrogen system of the first aspect or the second aspect, further including a fourth flow path through which the hydrogen-containing gas to be supplied to the anode of the compressor flows, in which the second flow path merges with the fourth flow path.

With the above configuration, since the second flow path and the fourth flow path are merged in the hydrogen system of this aspect, the high-humidity hydrogen-containing gas existing in the fourth flow path downstream of the point at which the two paths merge can be replaced with the low-humidity cathode off-gas supplied from the cathode. This makes the occurrence of flooding in the fourth flow path less likely in the hydrogen system of this aspect.

A hydrogen system of a fourth aspect of the present disclosure may be the hydrogen system of the second aspect, further including a first check valve that is provided on the third flow path downstream of the point at which the second flow path branches and that prevents a flow in the direction opposite to the direction in which the cathode off-gas discharged from the cathode of the compressor flows.

With the above configuration, since the hydrogen system of this aspect has the first check valve provided on the third flow path, it is possible to limit the amount of the gas to be supplied from the cathode to the anode appropriately when the on-off valve provided on the second flow path is open in the normal stop state.

For example, in the case where the high-pressure hydrogen produced at the cathode of the compressor is supplied to a hydrogen reservoir through the third flow path and if the third flow path does not have the first check valve, there is a possibility that hydrogen in the hydrogen reservoir moves through the third flow path and the second flow path in this order to the anode when the on-off valve provided on the second flow path is open. However, since the hydrogen system of this aspect has the first check valve provided on the third flow path, it is possible to reduce such possibility. This configuration inhibits decrease in the efficiency of hydrogen compression operation in the compressor.

Here, it is possible to limit the amount of gas supplied from the cathode to the anode by closing an appropriate on-off valve provided on the third flow path. However, in case that a failure occurs in this on-off valve, it is difficult to limit the amount of gas supplied from the cathode to the anode appropriately.

In light of the above, the hydrogen system of this aspect uses the first check valve having a simple structure, making it possible to reduce the above problem.

A hydrogen system of a fifth aspect of the present disclosure may be the hydrogen system of the third aspect, further including a second check valve that is provided on the fourth flow path upstream of the point at which the second flow path merges and that prevents a flow in the direction opposite to the direction in which the hydrogen-containing gas to be supplied to the anode of the compressor flows.

With the above configuration, since the hydrogen system of this aspect has the second check valve provided on the fourth flow path, it is possible to inhibit the high-pressure cathode off-gas to be supplied from the cathode to the anode from flowing into an anode gas supply system designed based on low-pressure specifications when the on-off valve provided on the second flow path is open in the normal stop state. This configuration in the hydrogen system of this aspect makes it possible to reduce possible damages to the equipment or the like designed based on low-pressure specifications and provided in the anode-gas supply system, compared to the case where the fourth flow path does not have the second check valve.

Here, it is possible to inhibit the high-pressure cathode off-gas from flowing into the anode-gas supply system designed based on low-pressure specifications by closing an appropriate on-off valve provided on the fourth flow path. However, in case that a failure occurs in this on-off valve, it is difficult to inhibit such inflow of the cathode off-gas.

In light of the above, the hydrogen system of this aspect uses the second check valve having a simple structure, making it possible to reduce the above problem.

A hydrogen system of a sixth aspect of the present disclosure may be the hydrogen system of any one of the first to fifth aspects, further including a pressure-reducing valve that is provided on the second flow path downstream of the on-off valve and that depressurizes the cathode off-gas flowing through the second flow path.

With the above configuration, the hydrogen system of this aspect can reduce, using the pressure-reducing valve, the pressure of the cathode off-gas to be supplied to the anode via the second flow path when the on-off valve provided on the second flow path is open in the normal stop state. This reduces the possibility of the occurrence of damage to the members used in the anode of the compressor.

A hydrogen system of a seventh aspect of the present disclosure may be the hydrogen system of the sixth aspect, further including a third check valve that is provided on the second flow path downstream of the pressure-reducing valve and that prevents a flow in the direction opposite to the direction in which the cathode off-gas flows through the second flow path.

With the above configuration of the hydrogen system of this aspect, even in the case where the electrolyte membrane is damaged, it is possible to prevent high-pressure hydrogen existing at the cathode from flowing back to the pressure-reducing valve through the second flow path, making it less likely that a failure occurs in the pressure-reducing valve.

A hydrogen system of an eighth aspect of the present disclosure may be the hydrogen system of the seventh aspect, further including a flow-rate adjuster that is provided on the second flow path between the pressure-reducing valve and the third check valve and that adjusts the flow rate of the cathode off-gas flowing through the second flow path.

With the configuration, when the on-off valve provided on the second flow path is open in the normal stop state, the hydrogen system of this aspect can limit, using the flow-rate adjuster, the flow rate of the cathode off-gas flowing through the second flow path to a desired flow rate. With this operation, the hydrogen system of this aspect can reduce the above flow rate of the cathode off-gas to stably supply the cathode off-gas from the cathode to the anode through the second flow path. In addition, by reducing the above flow rate of the cathode off-gas, the hydrogen system of this aspect can make longer the time taken for the low-humidity cathode off-gas to pass through the anode. This makes the occurrence of flooding in the anode gas flow path less likely in the hydrogen system of this aspect.

A hydrogen system of a ninth aspect of the present disclosure is the hydrogen system of the fifth aspect in which the first flow path merges with the fourth flow path at a point downstream of the second check valve.

Since the hydrogen system of this aspect with the above configuration opens the on-off valve provided on the second flow path in the normal stop state, when the high-pressure cathode off-gas supplied to the anode of the compressor is discharged from the anode, it is possible to inhibit the cathode off-gas flowing into the anode-gas supply system designed based on low-pressure specifications. This configuration in the hydrogen system of this aspect makes it possible to reduce possible damages to the equipment or the like designed based on low-pressure specifications and provided in the anode-gas supply system, compared to the case where the fourth flow path does not have the second check valve.

A method of operating a hydrogen system according to a tenth aspect of the present disclosure includes: a step of applying a voltage between an anode and a cathode to move hydrogen in hydrogen-containing gas supplied to the anode to the cathode via an electrolyte membrane and compress the hydrogen; a step of supplying cathode off-gas compressed at the cathode to the anode when the step of compressing the hydrogen is normally stopped; and a step of discharging, via a flow path through which hydrogen-containing gas discharged from the anode flows, the cathode off-gas supplied to the anode.

Accordingly, with the method of operating a hydrogen system according to this aspect, the possibility of the occurrence of flooding in the anode is less than with techniques according to the related art. In addition, with the method of operating a hydrogen system of this aspect, the decrease in the strength of the electrolyte membrane due to creep is less than in techniques according to the related art. Details of the operational advantages that the method of operating a hydrogen system according to this aspect provides are the same as or similar to those of the hydrogen system of the first aspect, and hence description thereof is omitted.

Hereafter, embodiments of the present disclosure will be described with reference to the attached drawings. Note that each of the embodiments described below is an example of the above aspects. Hence, the shapes, materials, and constituents, as well as the arrangement positions of the constituents, the ways of connecting the constituents, and the like are mere examples and are not intended to limit the above aspects unless stated in the claims. Of the constituents described below, the constituents not stated in the independent claims, which express the highest concept of the aspects above, are described as optional. In addition, for the constituents having the same symbols in the drawings, description thereof may be omitted. In the drawings, the constituents are schematically illustrated for easy understanding, and hence, the shapes, the ratios of dimensions, and the like are sometimes not precise.

### (First Embodiment)

The following embodiment describes the configuration and operation of a hydrogen system including an electrochemical hydrogen pump which is an example of the compressor described above.

### [Configuration of Apparatus]

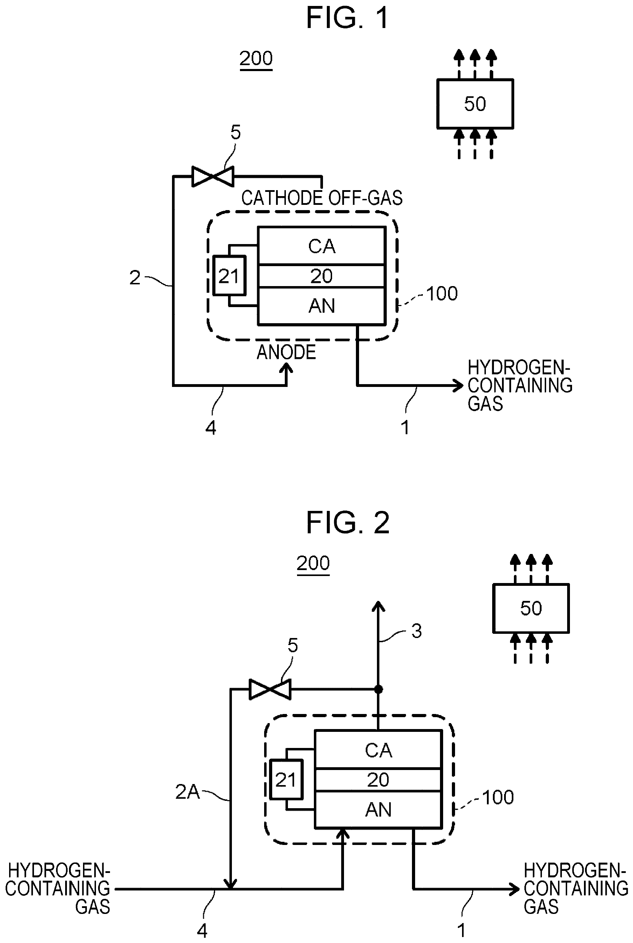

Fig. 1 is a diagram illustrating an example of a hydrogen system of a first embodiment.

In the example illustrated in Fig. 1, the hydrogen system 200 of the first embodiment includes an electrochemical hydrogen pump 100, a first flow path 1, a second flow path 2, an on-off valve 5, and a controller 50.

A cell of the electrochemical hydrogen pump 100 includes an electrolyte membrane 20, an anode AN, and a cathode CA. The electrochemical hydrogen pump 100 may include a stack in which a plurality of cells each being such a cell are stacked. Details will be described later.

The anode AN is provided on one of the main surfaces of the electrolyte membrane 20. The anode AN is an electrode including an anode catalyst layer and an anode gas diffusion layer. The cathode CA is provided on the other of the main surfaces of the electrolyte membrane 20. The cathode CA is an electrode including a cathode catalyst layer and a cathode gas diffusion layer. With this configuration, the electrolyte membrane 20 is sandwiched between the anode AN and the cathode CA so as to be in contact with the anode catalyst layer and the cathode catalyst layer.

The electrolyte membrane 20 may have any configuration as long as the membrane has proton conductivity. Examples of the electrolyte membrane 20 include a fluorine-based polymer electrolyte membrane and a hydrocarbon-based electrolyte membrane. Specifically, for example, Nafion (registered trademark, available from DuPont), Aciplex (registered trademark, available from Asahi Kasei Corp.) or the like may be used for the electrolyte membrane 20, but the material is not limited to those examples.

The anode catalyst layer is provided on one of the main surfaces of the electrolyte membrane 20. The anode catalyst layer contains carbon, which can carry catalyst metal (for example, platinum) in a dispersed state, but is not limited to this example.

The cathode catalyst layer is provided on the other of the main surfaces of the electrolyte membrane 20. The cathode catalyst layer contains carbon, which can carry catalyst metal (for example, platinum) in a dispersed state, but is not limited to this example.

Examples of the preparation method for catalysts for both the cathode catalyst layer and the anode catalyst layer include various methods, and the method is not limited to any specific one. Examples of carbon-based powder include powders such as graphite, carbon black, and conductive activated carbon. The method in which a carbon carrier supports platinum or other catalyst metals is not limited to any specific one. For example, a method such as powder mixing or liquid-phase mixing may be used. Examples of the latter liquid-phase mixing include a method in which a carrier such as carbon is dispersed in a colloidal solution containing catalyst components to adsorb the catalyst components. The state of the catalyst metal such as platinum supported by the carbon carrier is not limited to any specific one. For example, catalyst metal may be made into fine particles and supported in a high dispersion state on a carrier.

The cathode gas diffusion layer is provided on the cathode catalyst layer. The cathode gas diffusion layer is composed of a porous material and has electrical conductivity and gas diffusivity. The cathode gas diffusion layer desirably has elasticity so as to appropriately follow the displacement or deformation of the constituent members caused by the pressure difference between the cathode CA and the anode AN during the operation of the electrochemical hydrogen pump 100. The base material of the cathode gas diffusion layer may be, for example, a carbon-fiber sintered member or the like but is not limited to this example.

The anode gas diffusion layer is provided on the anode catalyst layer. The anode gas diffusion layer is composed of a porous material and has electrical conductivity and gas diffusivity. The anode gas diffusion layer desirably has a stiffness strong enough to withstand the pressing force of the electrolyte membrane 20 caused by the above pressure difference during the operation of the electrochemical hydrogen pump 100. The base material of the anode gas diffusion layer may be, for example, a carbon-particle sintered member or the like but is not limited to this example.

As illustrated in Fig. 1, the electrochemical hydrogen pump 100 includes a voltage application unit 21.

The voltage application unit 21 applies a voltage between the anode AN and the cathode CA. The voltage application unit 21 may have any configuration capable of applying a voltage between the anode AN and the cathode CA. In the example illustrated in Fig. 1, the high-potential side terminal of the voltage application unit 21 is connected to the anode AN, and the low-potential side terminal of the voltage application unit 21 is connected to the cathode CA. Examples of the voltage application unit 21 include a DC/DC converter and an AC/DC converter. A DC/DC converter is used in the case where the voltage application unit 21 is connected to a DC power supply such as a solar battery, fuel cells, or other batteries. An AC/DC converter is used in the case where the voltage application unit 21 is connected to an AC power supply such as a commercial power supply. The voltage application unit 21 may be, for example, an electric-power-based power supply capable of adjusting the voltage applied between the anode AN and the cathode CA and the current flowing between the anode AN and the cathode CA such that the electric power supplied to the cell is a specified set value.

In the electrochemical hydrogen pump 100 having the above configuration, the voltage application unit 21 applies power between the anode AN and the cathode CA. Specifically, the electrochemical hydrogen pump 100 is an apparatus in which the voltage application unit 21 applies a voltage between the anode AN and the cathode CA, thereby moving hydrogen contained in the hydrogen-containing gas supplied to the anode AN to the cathode CA and compressing the hydrogen. This operation produces high-pressure hydrogen at the cathode CA of the electrochemical hydrogen pump 100.

Note that the above hydrogen-containing gas may be, for example, hydrogen gas produced by electrolysis of water or reformed gas produced by reforming reaction of hydrocarbon gas.

Although not illustrated in Fig. 1, members and equipment necessary for the hydrogen compression operation of the hydrogen system 200 are provided as appropriate.

For example, a pair of separators may be provided so as to sandwich the anode AN and the cathode CA from their outsides. In this case, the separator in contact with the anode AN is an electrically conductive plate member for supplying the anode AN with hydrogen-containing gas. This plate member includes a serpentine gas flow path through which the hydrogen-containing gas supplied to the anode AN flows. The separator in contact with the cathode CA is an electrically conductive plate member for deriving hydrogen from the cathode CA. This plate member includes a gas flow path through which the hydrogen derived from the cathode CA flows.

In addition, the electrochemical hydrogen pump 100 typically has sealing materials such as gaskets on both sides of the cell so that the high-pressure hydrogen does not leak to the outside. The sealing materials are assembled in advance so as to be integrated with the cell of the electrochemical hydrogen pump 100. On the outsides of the cell are disposed the separators described above for mechanically fixing the cell and electrically connecting the adjoining cells to each other in series.

In a typical layered structure, cells and separators are stacked alternately so that 10 to 200 cells or so are stacked. The stack is sandwiched between end plates via current collector plates and insulation plates, and both end plates are tightened with fastening rods. In this case, to supply an appropriate amount of hydrogen-containing gas to the gas flow path of each separator, groove-shaped branch paths need to branch from an appropriate conduit, and the downstream end of each of the branch paths need to be connected to the gas flow path of each separator. Such a conduit is called a manifold, and this manifold is composed of, for example, a series of through holes formed at an appropriate position in the members composing the stack.

The hydrogen system 200 may further include a temperature detector for detecting the temperature of the cells, a temperature adjuster for adjusting the temperature of the cells, a dew-point adjuster for adjusting the dew point of the hydrogen-containing gas supplied to the anode AN, and other parts.

Note that the above not-illustrated members and equipment are examples, and the configuration of the hydrogen system 200 is not limited to these examples.

Next, a description will be given of the flow-path configuration of the hydrogen system 200 of the present embodiment.

In the first flow path 1, the hydrogen-containing gas discharged from the anode AN of the electrochemical hydrogen pump 100 flows. In the case where the electrochemical hydrogen pump 100 includes the foregoing stack, the first flow path 1 may communicate with, for example, the manifold for deriving the hydrogen-containing gas.

Here, the second flow path 2 is for supplying the cathode off-gas discharged from the cathode CA of the electrochemical hydrogen pump 100 to the anode AN of the electrochemical hydrogen pump 100. The second flow path 2 may have any configuration as long as the cathode off-gas discharged from the cathode CA of the electrochemical hydrogen pump 100 can be supplied to the anode AN of the electrochemical hydrogen pump 100 through the flow path. The cathode off-gas here includes the high-pressure hydrogen produced at the cathode CA.

For example, the upstream end of the second flow path 2 may be connected to any position communicating with the cathode CA of the electrochemical hydrogen pump 100.

The downstream end of the second flow path 2 may be connected to any position communicating with the anode AN of the electrochemical hydrogen pump 100.

As illustrated in Fig. 1, the on-off valve 5 is provided on the second flow path 2. The on-off valve 5 may have any configuration capable of opening/closing the second flow path 2. The on-off valve 5 may be, for example, an electromagnetic valve or the like, but not limited to this example.

The controller 50 opens the on-off valve 5 in a normal stop. The controller 50 may control the entire operation of the hydrogen system 200. Here, the "normal stop state" is a state different from a stop state (failure stop state) resulting from the occurrence of a failure such as flooding in a gas flow path. Specifically, an example of a normal stop state is a stop state following completion of hydrogen supply from the cathode CA of the electrochemical hydrogen pump 100 to a hydrogen demander, in other words, a stop state following satisfaction of hydrogen demand of the hydrogen demander. Satisfaction of hydrogen demand of the hydrogen demander means, for example, a state in which a hydrogen tank is filled with hydrogen. In the normal stop state of the hydrogen system 200, the operation of the hydrogen system 200 may be stopped. In this case, for example, applying voltage between the anode AN and the cathode CA by the voltage application unit 21 may be stopped, or the hydrogen-containing gas supply from a hydrogen-containing gas supply source to the anode AN may be stopped. Examples of the hydrogen-containing gas supply source include a reformer, a water electrolysis apparatus, a hydrogen tank, a hydrogen infrastructure, and the like.

The controller 50 includes, for example, an arithmetic circuit (not illustrated) and a storage circuit (not illustrated) for storing a control program. Examples of the arithmetic circuit include an MPU and a CPU. Examples of the storage circuit include memory. The controller 50 may be composed of a single controller that performs centralized control or may be composed of a plurality of controllers that work together to perform distributed control.

### [Operation]

Hereinafter, an example of hydrogen compression operation of the hydrogen system 200 will be described with reference to drawings.

The following operation may be performed, for example, by the arithmetic circuit of the controller 50 reading the control program from the storage circuit of the controller 50. Here, the controller 50 performing the following operations is not necessarily indispensable. An operator may perform part of the operations.

First, the anode AN of the electrochemical hydrogen pump 100 is supplied with low-pressure and high-humidity hydrogen-containing gas, and the voltage of the voltage application unit 21 is supplied to the electrochemical hydrogen pump 100. With this operation, hydrogen molecules in the anode catalyst layer of the anode AN are separated into protons and electrons (formula (1)). The protons are transferred within the electrolyte membrane 20 and move to the cathode catalyst layer. The electrons move through the voltage application unit 21 to the cathode catalyst layer. In this process, the on-off valve 5 is closed.

Then, hydrogen molecules are produced again in the cathode catalyst layer (formula (2)). It is known that when the protons are transferred within the electrolyte membrane 20, a certain amount of water moves with the protons as electroosmotic water from the anode AN to the cathode CA.

Here, for example, in the case where the high-pressure hydrogen produced at the cathode CA of the electrochemical hydrogen pump 100 is supplied to a not-illustrated hydrogen reservoir through a third flow path 3 (see Fig. 2), it is possible to compress the hydrogen (H₂) produced at the cathode CA by increasing the pressure loss of the third flow path 3 using a back pressure valve, an adjustment valve, or the like (not illustrated) provided on the third flow path 3. Here, increasing the pressure loss of the third flow path 3 corresponds to decreasing the opening degrees of the back pressure valve or the adjustment valve provided on the third flow path 3.
Anode:

   H₂ (low pressure) → 2H⁺ + 2e⁻ ··· (1)
Cathode:

   2H⁺ + 2e⁻ → H₂ (high pressure) ··· (2)

In the hydrogen system 200, as described above, the voltage application between the anode AN and the cathode CA of the electrochemical hydrogen pump 100 moves the hydrogen in the hydrogen-containing gas supplied to the anode AN, to the cathode CA via the electrolyte membrane 20 and compress the hydrogen. The high-pressure hydrogen produced at the cathode CA is supplied to a hydrogen demander at appropriate times. Examples of the hydrogen demander include a hydrogen reservoir and fuel cells which use hydrogen to generate power. Examples of the hydrogen reservoir include a hydrogen tank.

Next, the hydrogen system 200 is put into a normal stop state. For example, to put the hydrogen system 200 into this normal stop state, the voltage application between the anode AN and the cathode CA of the electrochemical hydrogen pump 100 may be stopped, or hydrogen-containing gas supply from the hydrogen-containing gas supply source to the anode AN may be stopped. With this operation, compressing hydrogen at the cathode CA is stopped.

Here, in the case where the electrochemical hydrogen pump 100 is, for example, a compressor for a fuel-cell forklift, when the above hydrogen compression operation turns into the normal stop state, hydrogen with a high pressure of approximately 40 MPa or so and a low humidity (for example, a relative humidity of approximately 300 ppm or so at approximately 50°C or so) exists on the cathode CA side. On the anode AN side exists hydrogen-containing gas with a low pressure of approximately 0.1 MPa or so and a high humidity (for example, a relative humidity of approximately 12% or so at approximately 50°C or so).

With this condition, when the hydrogen compression operation is put into the normal stop state as above, the on-off valve 5 is opened. Then, high-pressure hydrogen compressed at the cathode CA is supplied as cathode off-gas to the anode AN via the second flow path 2. At this time, the cathode off-gas supplied to the anode AN is discharged via the first flow path 1 through which the hydrogen-containing gas discharged from the anode AN flows.

With the hydrogen system 200 and the method of operating the hydrogen system 200 of the present embodiment, as described above, the possibility of the occurrence of flooding at the anode AN is less than with techniques according to the related art. Specifically, in the hydrogen system 200 and the method of operating the hydrogen system 200 of the present embodiment, the on-off valve 5 provided on the second flow path 2 is opened in the normal stop state, so that the high-humidity hydrogen-containing gas existing at the anode AN can be replaced with the low-humidity cathode off-gas supplied from the cathode CA. In other words, since the high-humidity hydrogen-containing gas is pushed out into the first flow path 1 by the low-humidity cathode off-gas, the gas existing in the anode AN is changed from the former hydrogen-containing gas to the latter cathode off-gas. This operation in the hydrogen system 200 and the method of operating the hydrogen system 200 of the present embodiment makes it less likely that flooding occurs in the anode gas flow path. Thus, when the electrochemical hydrogen pump 100 is restarted, it is possible to maintain the efficiency of hydrogen compression operation appropriately.

In addition, in the hydrogen system 200 and the method of operating the hydrogen system 200 of the present embodiment, it is possible to make it less likely than in techniques according to the related art that the strength of the electrolyte membrane 20 decreases due to creep. Specifically, in the hydrogen system 200 and the method of operating the hydrogen system 200 of the present embodiment, the on-off valve 5 provided on the second flow path 2 is opened in the normal stop state, and the pressure difference between the anode AN and the cathode CA decreases rapidly. Thus, it is less likely that creep occurs in the electrolyte membrane 20 and the electrolyte membrane 20 becomes thinner. Thus, the hydrogen system 200 and the method of operating the hydrogen system 200 of the present embodiment makes it possible to maintain the strength of the electrolyte membrane 20 appropriately.

### (Example)

Fig. 2 is a diagram illustrating an example of a hydrogen system according to Example of the first embodiment.

In the example illustrated in Fig. 2, a hydrogen system 200 includes an electrochemical hydrogen pump 100, a first flow path 1, a second flow path 2A, a third flow path 3, a fourth flow path 4, an on-off valve 5, and a controller 50.

Here, the electrochemical hydrogen pump 100, the first flow path 1, the on-off valve 5, and the controller 50 are the same as or similar to those of the first embodiment, and hence description thereof is omitted.

In the third flow path 3, the cathode off-gas discharged from the cathode CA of the electrochemical hydrogen pump 100 flows. In the case where the electrochemical hydrogen pump 100 includes the aforementioned stack, the third flow path 3 may communicate with, for example, the manifold for deriving the cathode off-gas. The hydrogen system 200 may have a configuration in which the high-pressure hydrogen produced at the cathode CA is supplied to a hydrogen reservoir (not illustrated) through the third flow path 3. Examples of the hydrogen reservoir include a hydrogen tank in which several tens MPa or so of hydrogen can be charged. In the example illustrated in Fig. 2, the second flow path 2A extends so as to branch from the third flow path 3. Note that another example of the connection point between the two paths will be described in a first modification.

In the fourth flow path 4, the hydrogen-containing gas to be supplied to the anode AN of the electrochemical hydrogen pump 100 flows. In the case where the electrochemical hydrogen pump 100 includes the aforementioned stack, the fourth flow path 4 may communicate with, for example, the manifold for introducing the hydrogen-containing gas. The upstream end of the fourth flow path 4 may be connected to, for example, a hydrogen-containing-gas supply source. In the example illustrated in Fig. 2, the second flow path 2A extends so as to merge with the fourth flow path 4. Note that another example of the connection point between the two paths will be described in a second modification.

With the above configuration, since the second flow path 2A branches from the third flow path 3 in the hydrogen system 200 of Example of the present embodiment, the points at which the cathode off-gas is discharged from the cathode CA can be gathered in the electrochemical hydrogen pump 100.

In addition, since the second flow path 2A and the fourth flow path 4 are merged in the hydrogen system 200 of Example of the present embodiment, the high-humidity hydrogen-containing gas existing downstream of the merging point of the two paths in the fourth flow path 4 can be replaced with the low-humidity cathode off-gas supplied from the cathode CA. This makes it less likely in the hydrogen system 200 of the present embodiment that flooding occurs in the fourth flow path 4.

Note that the operational advantages that the hydrogen system 200 of Example provides are the same as or similar to those of the hydrogen system 200 of the first embodiment, except the operational advantage described above.

Except for the above feature, the hydrogen system 200 of Example may be the same as or similar to the hydrogen system 200 of the first embodiment.

### (First Modification)

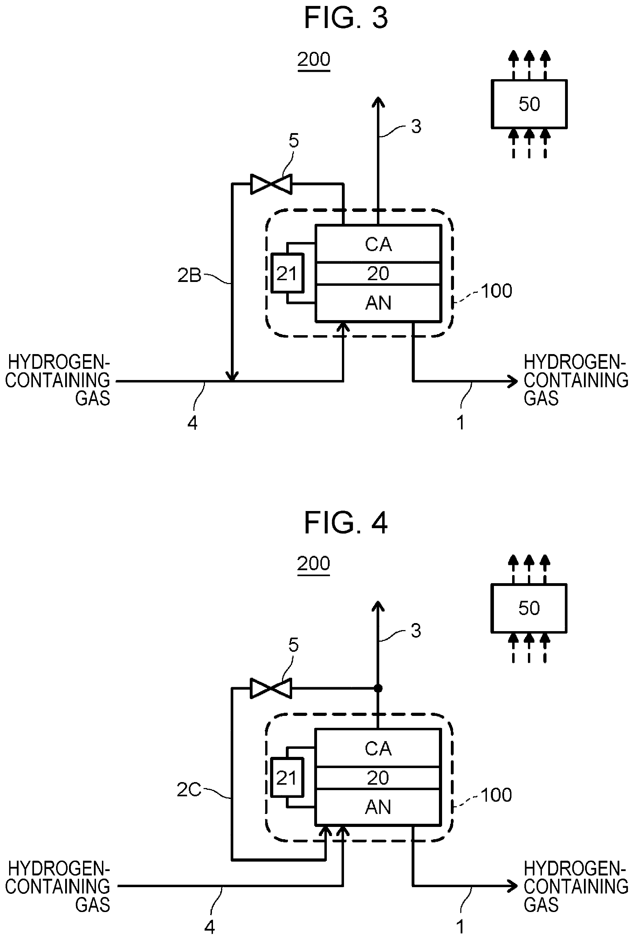

Fig. 3 is a diagram illustrating an example of a hydrogen system according to a first modification of the first embodiment.

In the example illustrated in Fig. 3, a hydrogen system 200 includes an electrochemical hydrogen pump 100, a first flow path 1, a second flow path 2B, a third flow path 3, a fourth flow path 4, an on-off valve 5, and a controller 50.

Here, the electrochemical hydrogen pump 100, the first flow path 1, the third flow path 3, the fourth flow path 4, the on-off valve 5, and the controller 50 are the same as or similar to those of Example of the first embodiment, and hence description thereof is omitted.

Here, the second flow path 2B is for supplying the cathode off-gas discharged from the cathode CA of the electrochemical hydrogen pump 100 to the anode AN of the electrochemical hydrogen pump 100. In the example illustrated in Fig. 3, the second flow path 2B extends so as to communicate with the cathode CA at a position different from the upstream end of the third flow path 3 and merge with the fourth flow path 4.

Note that the operational advantages that the hydrogen system 200 of this modification provides are the same as or similar to those of the hydrogen system 200 of Example of the first embodiment, except the operational advantage provided by the configuration in which the second flow path 2A branches from the third flow path 3.

Except for the above feature, the hydrogen system 200 of this modification may be the same as or similar to the hydrogen system 200 of the first embodiment or Example of the first embodiment.

### (Second Modification)

Fig. 4 is a diagram illustrating an example of a hydrogen system of a second modification of the first embodiment.

In the example illustrated in Fig. 4, a hydrogen system 200 includes an electrochemical hydrogen pump 100, a first flow path 1, a second flow path 2C, a third flow path 3, a fourth flow path 4, an on-off valve 5, and a controller 50.

Here, the electrochemical hydrogen pump 100, the first flow path 1, the third flow path 3, the fourth flow path 4, the on-off valve 5, and the controller 50 are the same as or similar to those of Example of the first embodiment, and hence description thereof is omitted.

Here, the second flow path 2C is for supplying the cathode off-gas discharged from the cathode CA of the electrochemical hydrogen pump 100 to the anode AN of the electrochemical hydrogen pump 100. In the example illustrated in Fig. 4, the second flow path 2C extends so as to branch from the third flow path 3 and communicate with the anode AN at a position different from the downstream end of the fourth flow path 4.

Note that the operational advantages that the hydrogen system 200 of this modification provides are the same as or similar to those of the hydrogen system 200 of Example of the first embodiment, except the operational advantage provided by the configuration in which the second flow path 2A merges with the fourth flow path 4.

Except for the above feature, the hydrogen system 200 of this modification may be the same as or similar to the hydrogen system 200 of any one of the first embodiment, Example of the first embodiment, and the first modification of the first embodiment.

### (Second Embodiment)

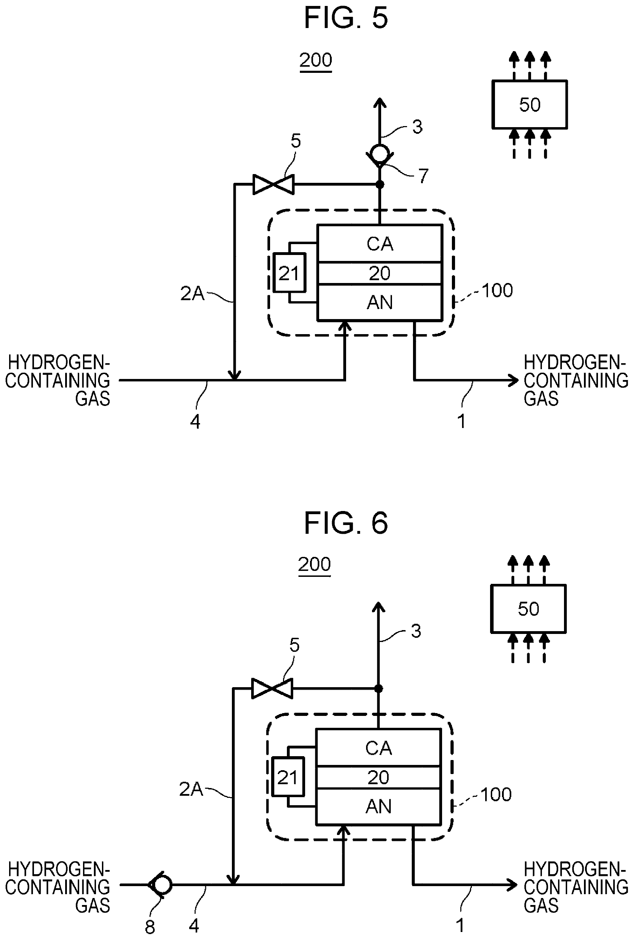

Fig. 5 is a diagram illustrating an example of a hydrogen system of a second embodiment.

In the example illustrated in Fig. 5, a hydrogen system 200 includes an electrochemical hydrogen pump 100, a first flow path 1, a second flow path 2A, a third flow path 3, a fourth flow path 4, an on-off valve 5, a first check valve 7, and a controller 50.

Here, the electrochemical hydrogen pump 100, the first flow path 1, the second flow path 2A, the third flow path 3, the fourth flow path 4, the on-off valve 5, and the controller 50 are the same as or similar to those of Example of the first embodiment, and hence description thereof is omitted.

The first check valve 7 is provided on the third flow path 3 downstream of the position at which the second flow path 2A branches and is for preventing the flow in the direction opposite to the direction in which the cathode off-gas discharged from the cathode CA of the electrochemical hydrogen pump 100 flows.

With the above configuration, since the hydrogen system 200 of the present embodiment has the first check valve 7 provided on the third flow path 3, it is possible to limit the amount of the gas supplied from the cathode CA to the anode AN appropriately when the on-off valve 5 provided on the second flow path 2A is open in the normal stop state.

For example, in the case where the high-pressure hydrogen produced at the cathode CA of the electrochemical hydrogen pump 100 is supplied to a hydrogen reservoir (not illustrated) through the third flow path 3, and the third flow path 3 does not have the first check valve 7, there is a possibility that hydrogen in the hydrogen reservoir moves through the third flow path 3 and the second flow path 2A in this order to the anode AN when the on-off valve 5 provided on the second flow path 2A is open. However, since the hydrogen system 200 of the present embodiment has the first check valve 7 provided on the third flow path 3, it is possible to reduce such possibility. This configuration inhibits decrease in the efficiency of hydrogen compression operation in the electrochemical hydrogen pump 100.

Here, it is possible to limit the amount of gas supplied from the cathode CA to the anode AN by closing an appropriate on-off valve (not illustrated) provided on the third flow path 3. However, in case that a failure occurs in this on-off valve, it is difficult to limit the amount of gas supplied from the cathode CA to the anode AN appropriately.

Unlike this case, in the hydrogen system 200 of the present embodiment, use of the first check valve 7 having a simple structure makes it possible to reduce the above problem.

Except for the above feature, the hydrogen system 200 of the present embodiment may be the same as or similar to the hydrogen system 200 of any one of the first embodiment, Example of the first embodiment, and the first and second modifications of the first embodiment. For example, the hydrogen system 200 of the first modification of the first embodiment (Fig. 3) also provides an operational advantage the same as or similar to the above. Specifically, in the case where the high-pressure hydrogen produced at the cathode CA of the electrochemical hydrogen pump 100 is supplied to a hydrogen reservoir through the third flow path 3, and the third flow path 3 does not have the first check valve, there is a possibility that hydrogen in the hydrogen reservoir moves through the third flow path 3, the inside of the cathode CA, and the second flow path 2A in this order to the anode AN when the on-off valve 5 provided on the second flow path 2A is open. However, since the hydrogen system 200 of the present embodiment has the first check valve provided on the third flow path 3, it is possible to reduce such possibility.

### (Third Embodiment)

Fig. 6 is a diagram illustrating an example of a hydrogen system of a third embodiment.

In the example illustrated in Fig. 6, a hydrogen system 200 includes an electrochemical hydrogen pump 100, a first flow path 1, a second flow path 2A, a third flow path 3, a fourth flow path 4, an on-off valve 5, a second check valve 8, and a controller 50.

Here, the electrochemical hydrogen pump 100, the first flow path 1, the second flow path 2A, the third flow path 3, the fourth flow path 4, the on-off valve 5, and the controller 50 are the same as or similar to those of Example of the first embodiment, and hence description thereof is omitted.

The second check valve 8 is provided on the fourth flow path 4 upstream of the point at which the second flow path 2A merges and is for preventing the flow in the direction opposite to the direction in which the hydrogen-containing gas to be supplied to the anode AN of the electrochemical hydrogen pump 100 flows.

With the above configuration, since the hydrogen system 200 of the present embodiment has the second check valve 8 provided on the fourth flow path 4, it is possible to inhibit the high-pressure cathode off-gas supplied from the cathode CA to the anode AN from flowing into an anode gas supply system designed based on low-pressure specifications when the on-off valve 5 provided on the second flow path 2A is open in the normal stop state. This configuration in the hydrogen system 200 of the present embodiment makes it possible to reduce possible damages to the equipment or the like designed based on low-pressure specifications and provided in an anode-gas supply system, compared to the case where the fourth flow path 4 does not have the second check valve 8. Here, the anode-gas supply system means a hydrogen-containing-gas supply source such as a reformer, a water electrolysis apparatus, and a hydrogen tank, excluding the anode-gas supply line.

Here, it is possible to inhibit the high-pressure cathode off-gas from flowing into the anode-gas supply system designed based on low-pressure specifications by closing an appropriate on-off valve (not illustrated) provided on the fourth flow path 4. However, in case that a failure occurs in this on-off valve, it is difficult to inhibit such inflow of the cathode off-gas appropriately.

Unlike this case, in the hydrogen system 200 of this configuration, use of the second check valve 8 having a simple structure makes it possible to reduce the above problem.

Except for the above feature, the hydrogen system 200 of the present embodiment may be the same as or similar to the hydrogen system 200 of any one of the first embodiment, Example of the first embodiment, the first and second modifications of the first embodiment, and the second embodiment.

### (Fourth Embodiment)

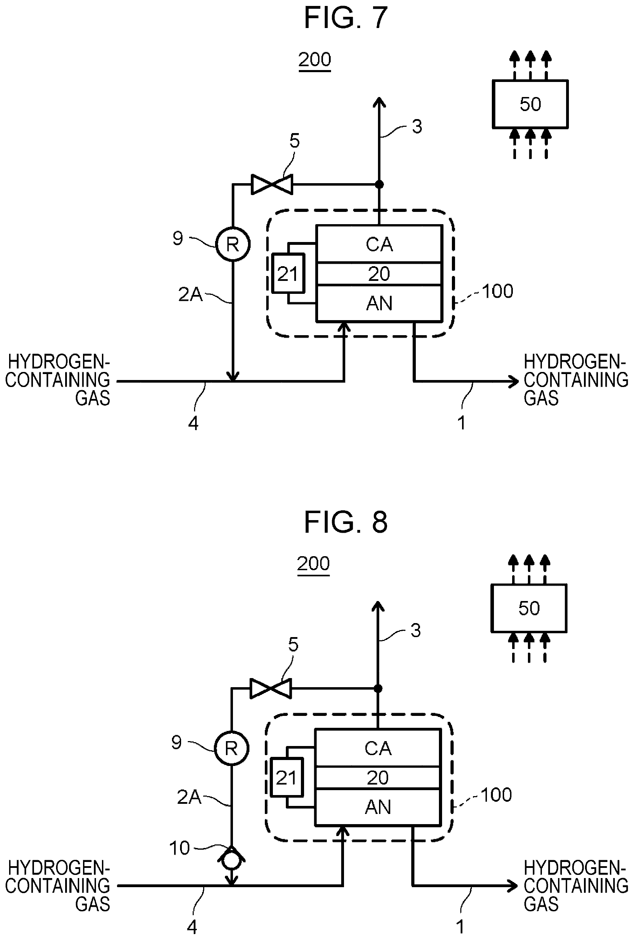

Fig. 7 is a diagram illustrating an example of a hydrogen system of a fourth embodiment.

In the example illustrated in Fig. 7, a hydrogen system 200 includes an electrochemical hydrogen pump 100, a first flow path 1, a second flow path 2A, a third flow path 3, a fourth flow path 4, an on-off valve 5, a pressure-reducing valve 9, and a controller 50.

Here, the electrochemical hydrogen pump 100, the first flow path 1, the second flow path 2A, the third flow path 3, the fourth flow path 4, the on-off valve 5, and the controller 50 are the same as or similar to those of Example of the first embodiment, and hence description thereof is omitted.

The pressure-reducing valve 9 is provided on the second flow path 2A downstream of the on-off valve 5 and is for depressurizing the cathode off-gas flowing through the second flow path 2A.

With the above configuration of the hydrogen system 200 of the present embodiment, the pressure-reducing valve 9 can reduce the pressure of the cathode off-gas supplied to the anode AN via the second flow path 2A when the on-off valve 5 provided on the second flow path 2A is open in the normal stop state. This configuration reduces the possibility of occurrence of damage to the members used in the anode AN of the electrochemical hydrogen pump 100.

The number of pressure-reducing valves 9 is not limited to one. For example, in the case where two or more pressure-reducing valves are provided on the second flow path 2A, it is easier to adjust the pressure of the cathode off-gas flowing through the second flow path 2A to a desired value.

Except for the above feature, the hydrogen system 200 of the present embodiment may be the same as or similar to the hydrogen system 200 of any one of the first embodiment, Example of the first embodiment, the first and second modifications of the first embodiment, the second embodiment, and the third embodiment.

### (Fifth Embodiment)

Fig. 8 is a diagram illustrating an example of a hydrogen system of a fifth embodiment.

In the example illustrated in Fig. 8, a hydrogen system 200 includes an electrochemical hydrogen pump 100, a first flow path 1, a second flow path 2A, a third flow path 3, a fourth flow path 4, an on-off valve 5, a pressure-reducing valve 9, a third check valve 10, and a controller 50.

Here, the electrochemical hydrogen pump 100, the first flow path 1, the second flow path 2A, the third flow path 3, the fourth flow path 4, the on-off valve 5, and the controller 50 are the same as or similar to those of Example of the first embodiment, and hence description thereof is omitted. In addition, the pressure-reducing valve 9 is the same as or similar to the one in the fourth embodiment, and hence description thereof is omitted.

The third check valve 10 is provided on the second flow path 2A downstream of the pressure-reducing valve 9 and is for preventing the flow in the direction opposite to the direction in which the cathode off-gas flows through the second flow path 2A.

With the above configuration of the hydrogen system 200 of the present embodiment, even in case that the electrolyte membrane 20 is damaged, it is possible to prevent hydrogen existing at the cathode CA from flowing back to the pressure-reducing valve 9 through the electrolyte membrane 20 and the second flow path 2A, making it less likely for the pressure-reducing valve 9 to be failed.

Except for the above feature, the hydrogen system 200 of the present embodiment may be the same as or similar to the hydrogen system 200 of any one of the first embodiment, Example of the first embodiment, the first and second modifications of the first embodiment, the second embodiment, the third embodiment, and the fourth embodiment.

### (Sixth Embodiment)

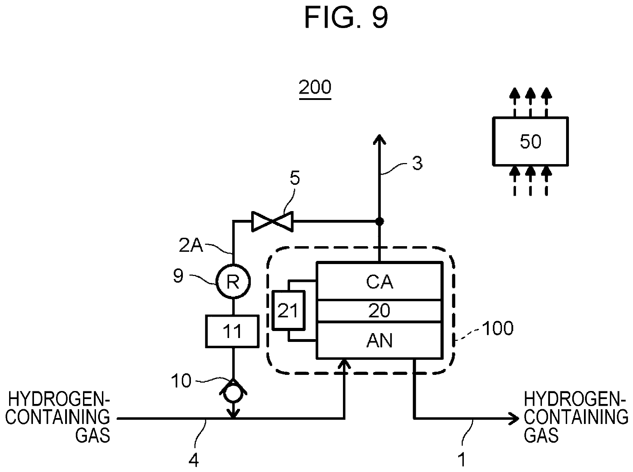

Fig. 9 is a diagram illustrating an example of a hydrogen system of a sixth embodiment.

In the example illustrated in Fig. 9, a hydrogen system 200 includes an electrochemical hydrogen pump 100, a first flow path 1, a second flow path 2A, a third flow path 3, a fourth flow path 4, an on-off valve 5, a pressure-reducing valve 9, a third check valve 10, a flow-rate adjuster 11, and a controller 50.

Here, the electrochemical hydrogen pump 100, the first flow path 1, the second flow path 2A, the third flow path 3, the fourth flow path 4, the on-off valve 5, and the controller 50 are the same as or similar to those of Example of the first embodiment, and hence description thereof is omitted. In addition, the pressure-reducing valve 9 and the third check valve 10 are the same as or similar to those of the fourth embodiment and the fifth embodiment, respectively, and hence description thereof is omitted.

The flow-rate adjuster 11 is provided between the pressure-reducing valve 9 and the third check valve 10 on the second flow path 2A and is equipment for adjusting the flow rate of the cathode off-gas flowing through the second flow path 2A. The flow-rate adjuster 11 may have any configuration capable of adjusting the flow rate of the cathode off-gas flowing through the second flow path 2A. Examples of the flow-rate adjuster 11 includes a mass flow controller.

With the configuration in the hydrogen system 200 of the present embodiment, when the on-off valve 5 provided on the second flow path 2A is open in the normal stop state, the flow-rate adjuster 11 can limit the flow rate of the cathode off-gas flowing through the second flow path 2A to a desired flow rate. With this operation, the hydrogen system 200 of the present embodiment can reduce the above flow rate of the cathode off-gas to stably supply the cathode off-gas from the cathode CA to the anode AN through the second flow path 2A. In addition, in the hydrogen system 200 of the present embodiment, reducing the above flow rate of the cathode off-gas can make longer the time taken for low-humidity hydrogen to pass through the anode AN. This makes it less likely in the hydrogen system 200 of the present embodiment that flooding occurs in the anode gas flow path.

Except for the above feature, the hydrogen system 200 of the present embodiment may be the same as or similar to the hydrogen system 200 of any one of the first embodiment, Example of the first embodiment, the first and second modifications of the first embodiment, the second embodiment, the third embodiment, the fourth embodiment, and the fifth embodiment.

### (Seventh Embodiment)

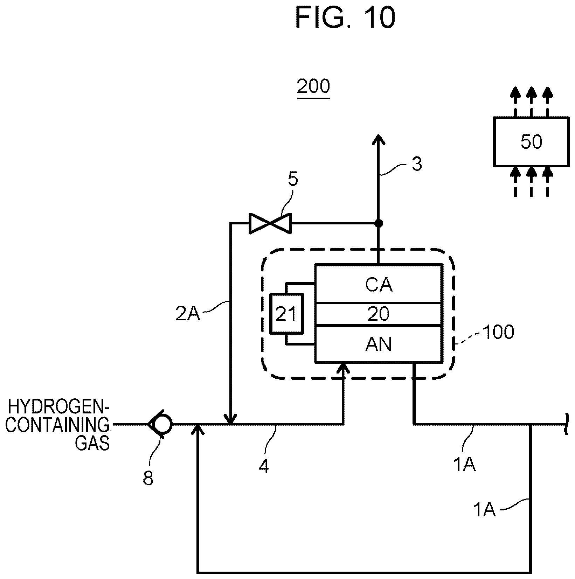

Fig. 10 is a diagram illustrating an example of a hydrogen system of a seventh embodiment.

In the example illustrated in Fig. 10, a hydrogen system 200 includes an electrochemical hydrogen pump 100, a first flow path 1A, a second flow path 2A, a third flow path 3, a fourth flow path 4, an on-off valve 5, a second check valve 8, and a controller 50.

Here, the electrochemical hydrogen pump 100, the second flow path 2A, the third flow path 3, the fourth flow path 4, the on-off valve 5, and the controller 50 are the same as or similar to those of the first embodiment, and hence description thereof is omitted. In addition, the second check valve 8 is the same as or similar to the one in the third embodiment, and hence description thereof is omitted.

In the first flow path 1A, the hydrogen-containing gas discharged from the anode AN of the electrochemical hydrogen pump 100 flows. In the case where the electrochemical hydrogen pump 100 includes the aforementioned stack, the first flow path 1A may communicate with, for example, the manifold for deriving the hydrogen-containing gas.

Here, the first flow path 1A extends so as to merge with the fourth flow path 4 at a position downstream of the second check valve 8. Note that the hydrogen system 200 may have an on-off valve (not illustrated) on the first flow path 1A.

In the above configuration of the hydrogen system 200 of the present embodiment, when the on-off valve 5 provided on the second flow path 2A is open in the normal stop state, and high-pressure cathode off-gas supplied to the anode AN of the electrochemical hydrogen pump 100 is discharged from the anode AN, it is possible to inhibit the high-pressure cathode off-gas flowing into the anode-gas supply system designed based on low-pressure specifications. This configuration in the hydrogen system 200 of the present embodiment makes it possible to reduce possible damages to the equipment or the like designed based on low-pressure specifications and provided in the anode-gas supply system, compared to the case where the fourth flow path 4 does not have the second check valve 8.

Except for the above feature, the hydrogen system 200 of the present embodiment may be the same as or similar to the hydrogen system 200 of any one of the first embodiment, Example of the first embodiment, the first and second modifications of the first embodiment, the second embodiment, the third embodiment, the fourth embodiment, the fifth embodiment, and the sixth embodiment.

Note that the first embodiment, Example of the first embodiment, the first and second modifications of the first embodiment, the second embodiment, the third embodiment, the fourth embodiment, the fifth embodiment, the sixth embodiment, and the seventh embodiment may be combined with one another unless it makes inconsistency.

From the above description, it is obvious for those skilled in the art that there are many kinds of improvement and other embodiments on the present disclosure. Thus, the above description should be understood only as examples, and the description is provided for the purpose of teaching those skilled in the art the best modes to implement the present disclosure. Thus, it is possible to change details of the structures and/or the functions substantially without departing from the spirit of the present disclosure.

### Industrial Applicability

An aspect of the present disclosure can be utilized for a hydrogen system and a method of operating a hydrogen system with which the possibility of the occurrence of flooding in the anode is less than with techniques according to the related art.

### Reference Signs List

1 FIRST FLOW PATH
1A FIRST FLOW PATH
2 SECOND FLOW PATH
2A SECOND FLOW PATH
2B SECOND FLOW PATH
2C SECOND FLOW PATH
3 THIRD FLOW PATH
4 FOURTH FLOW PATH
5 ON-OFF VALVE
7 FIRST CHECK VALVE
8 SECOND CHECK VALVE
9 PRESSURE-REDUCING VALVE
10 THIRD CHECK VALVE
11 FLOW-RATE ADJUSTER
20 ELECTROLYTE MEMBRANE
21 VOLTAGE APPLICATION UNIT
50 CONTROLLER
100 ELECTROCHEMICAL HYDROGEN PUMP
200 HYDROGEN SYSTEM
AN ANODE
CA CATHODE

## Claims

1. A hydrogen system comprising:
a compressor that applies a voltage between an anode and a cathode to move hydrogen in hydrogen-containing gas supplied to the anode to the cathode via an electrolyte membrane and compress the hydrogen;
a first flow path through which hydrogen-containing gas discharged from the anode of the compressor flows;
a second flow path to supply cathode off-gas to the anode of the compressor, the cathode off-gas being discharged from the cathode of the compressor;
an on-off valve provided on the second flow path; and
a controller that opens the on-off valve in a normal stop.

2. The hydrogen system according to Claim 1, further comprising
a third flow path through which the cathode off-gas discharged from the cathode of the compressor flows, wherein
the second flow path branches from the third flow path.

3. The hydrogen system according to Claim 1 or 2, further comprising
a fourth flow path through which the hydrogen-containing gas to be supplied to the anode of the compressor flows, wherein
the second flow path merges with the fourth flow path.

4. The hydrogen system according to Claim 2, further comprising
a first check valve that is provided on the third flow path downstream of a point at which the second flow path branches and that prevents a flow in a direction opposite to a direction in which the cathode off-gas discharged from the cathode of the compressor flows.

5. The hydrogen system according to Claim 3, further comprising
a second check valve that is provided on the fourth flow path upstream of a point at which the second flow path merges and that prevents a flow in a direction opposite to a direction in which the hydrogen-containing gas to be supplied to the anode of the compressor flows.

6. The hydrogen system according to any one of Claims 1 to 5, further comprising
a pressure-reducing valve that is provided on the second flow path downstream of the on-off valve and that depressurizes the cathode off-gas flowing through the second flow path.

7. The hydrogen system according to Claim 6, further comprising
a third check valve that is provided on the second flow path downstream of the pressure-reducing valve and that prevents a flow in a direction opposite to a direction in which the cathode off-gas flows through the second flow path.

8. The hydrogen system according to Claim 7, further comprising
a flow-rate adjuster that is provided on the second flow path between the pressure-reducing valve and the third check valve and that adjusts a flow rate of the cathode off-gas flowing through the second flow path.

9. The hydrogen system according to Claim 5, wherein
the first flow path merges with the fourth flow path at a point downstream of the second check valve.

10. A method of operating a hydrogen system, comprising:
a step of applying a voltage between an anode and a cathode to move hydrogen in hydrogen-containing gas supplied to the anode to the cathode via an electrolyte membrane, and compress the hydrogen;
a step of supplying cathode off-gas compressed at the cathode to the anode when the step of compressing the hydrogen is normally stopped; and
a step of discharging, via a flow path through which hydrogen-containing gas discharged from the anode flows, the cathode off-gas supplied to the anode.
